# EUROPÄISCHE PATENTSCHRIFT

(11) **EP 3 593 329 B1**
(45) Veröffentlichungstag und Bekanntmachung des Hinweises auf die Patenterteilung: **02.12.2020**
(21) Anmeldenummer: 18734112.8
(22) Anmeldetag: 11.06.2018
(51) Int. Cl.: G07C 9/00, B60R 25/25

(54) **VERFAHREN ZUR FERNSTEUERUNG EINER FUNKTION EINES FAHRZEUGS**
METHOD FOR THE REMOTE CONTROL OF A FUNCTION OF A VEHICLE
PROCÉDÉ DE COMMANDE À DISTANCE D'UNE FONCTION D'UN VÉHICULE

(30) Priorität: 27.07.2017 DE 102017007119
(43) Veröffentlichungstag der Anmeldung: 15.01.2020
(73) Patentinhaber: Daimler AG, 70372 Stuttgart (DE)
(72) Erfinder: RESTLE, Marc-Oliver, 70563 Vaihingen (DE); HUG, Tobias, 71106 Magstadt (DE); HILLER, Andreas, 70563 Stuttgart (DE); WOHLGEMUTH, Thomas, 72631 Aichtal (DE); RICK, Michael, 78479 Reichenau (DE)
(74) Vertreter: JENSEN & SON
(86) Internationale Anmeldenummer: PCT/EP2018/065338
(87) Internationale Veröffentlichungsnummer: WO 2019/020261

(56) Entgegenhaltungen:
- EP-A1- 2 930 585
- WO-A1-2016/189358
- DE-A1-102015 219 099
- US-A1- 2006 244 312

## Beschreibung

Die Erfindung betrifft ein Verfahren zur Fernsteuerung einer Funktion eines Fahrzeuges mittels einer Bedieneinrichtung.

Aus der DE 10 2013 010 819 A1 sind ein Verfahren und eine Vorrichtung zur Fernsteuerung einer Funktion eines Fahrzeuges bekannt. Dabei werden mittels zumindest einer in eine mobile Steuereinheit integrierten Signalempfangseinheit Signale des Fahrzeuges erfasst. An zumindest einer vorgegebenen Position am Fahrzeug wird ein optisches oder akustisches Signal erzeugt, wobei die Fernsteuerung ausschließlich dann freigegeben wird, wenn das optische oder akustische Signal von der Signalempfangseinheit erfasst wird.

Aus der WO 2015/010752 A1 sind ein Verfahren und eine Vorrichtung zur Fernsteuerung einer Funktion eines Fahrzeuges mit einem Touch-Screen bekannt. Dabei werden für ein sicheres Systemverhalten Rohdaten von einem unsicheren Bediengerät an ein sicheres Auswertgerät gesendet, um dort eine sichere Logik für die Bedienung zu implementieren.

Aus der DE 10 2014019570 A1 ist ein Verfahren zur Fernsteuerung einer Funktion eines Fahrzeugs bekannt, wobei die Fernsteuerung mittels einer mobilen Einheit erfolgt, die mit dem Fahrzeug drahtlos kommuniziert, und wobei die Funktion nur dann zur Fernsteuerung freigegeben wird, wenn ein ermittelter relativer Abstand zwischen dem Fahrzeug und der mobilen Einheit kleiner ist als ein vorgegebener Abstandsgrenzwert. Die Ermittlung des relativen Abstands basiert dabei auf der Ermittlung einer initialen Position der mobilen Einheit und auf der Ermittlung einer von der initialen Position ausgehenden Bewegung der mobilen Einheit.

Aus der US 2006/244312 A1 ist ein Verfahren zur Fernsteuerung einer Funktion eines Fahrzeugs mittels einer mobilen Bedieneinrichtung bekannt, wobei die Funktion eine Funktion zum Offenen einer Fahrzeugtür ist und wobei eine Bewegung der mobilen Bedieneinrichtung erfasst wird und die Funktion zur Ausführung freigegeben wird, wenn die erfasste Bewegung geringer als ein vorgegebener Bewegungswert ist.

Der Erfindung liegt die Aufgabe zugrunde, ein gegenüber dem Stand der Technik verbessertes Verfahren zur Fernsteuerung einer Funktion eines Fahrzeuges anzugeben.

Die Aufgabe wird erfindungsgemäß durch die in Anspruch 1 angegebenen Merkmale gelöst.

Vorteilhafte Ausgestaltungen der Erfindung sind Gegenstand der Unteransprüche.

Ein Verfahren zur Fernsteuerung einer Funktion eines Fahrzeuges mittels einer mobilen Bedieneinrichtung, bei dem die Funktion, insbesondere eine autonome Parkfunktion, in Abhängigkeit einer erfassten Bewegung der Bedieneinrichtung zur Ausführung freigegeben oder gesperrt wird, sieht erfindungsgemäß vor, dass für die Freigabe der Funktion zur Ausführung es erforderlich ist, dass die erfasste Bewegung eine Mikrobewegung ist. Die Feststellung, dass die erfasste Bewegung eine Mikrobewegung ist, ist mithin eine zwingende Bedingung, die erfüllt sein muss, wenn die Funktion zur Ausführung freigegeben werden soll. Selbstverständlich ist es denkbar, dass zusätzlich zu dieser Bedingung auch weitere Bedingungen erfüllt sein müssen, um die Funktion zur Ausführung freizugeben.

Vorteilhafterweise wird die Funktion zur Ausführung nicht freigegeben oder sie wird gesperrt, wenn keine Bewegung erfasst wird. Auf diese Weise wird sichergestellt, dass die Funktion nicht gestartet wird oder dass die Funktion, falls sie bereits gestartet ist, beendet oder abgebrochen wird, wenn die Bedieneinrichtung von einem Fahrzeugnutzer absolut ruhig gehalten wird. Ein solcher Fall ist unplausibel und deutet auf einen Fehlerfall hin, denn kein Fahrzeugnutzer wird in der Lage sein, die Bedieneinrichtung absolut ruhig zu halten.

Erfindungsgemäß wird eine Bewegung der Bedieneinrichtung als Mikrobewegung gewertet, wenn Schwankungen der Position und/oder Ausrichtung der Bedieneinrichtung erfasst werden, die geringfügig sind. Unter Schwankungen werden dabei Änderungen um eine Ruhelage herum verstanden, insbesondere Hin- und Her-Bewegungen/Schwenkungen.

Die Schwankungen werden vorteilhafterweise als geringfügig angesehen, wenn sie in ihrem Ausmaß und/oder in ihrer Dynamik begrenzt sind.

Die erfassten Schwankungen der Position werden beispielsweise als geringfügig angesehen, wenn sie in ihrem Ausmaß kleiner als etwa 30 cm sind. Besonders vorteilhaft ist es, die Schwankungen als geringfügig anzusehen, wenn sie in ihrem Ausmaß auf einen Bereich von wenigen Zentimetern oder auf einen Bereich von wenigen Millimetern begrenzt sind. Vorteilhafterweise werden die Schwankungen alternativ auch dann oder zusätzlich nur dann als geringfügig angesehen, wenn sie mit einer Geschwindigkeit erfolgen, die kleiner als eine vorgegebene Grenzgeschwindigkeit von bspw. 2 m/s ist.

Erfindungsgemäß werden die Schwankungen als geringfügig angesehen, wenn sie einer Bewegung entsprechen, die der Fahrzeugnutzer mit einer Hand ausführt, wenn er versucht, die Bedieneinrichtung in der Hand ruhig zu halten.

Vorteilhafterweise wird mittels der erfassten Mikrobewegung eine erfasste Geste plausibilisiert. Eine Geste kann beispielsweise eine auf einem Touchpad der Bedieneinrichtung ausgeführt Aktion sein, bspw. eine Berührung oder Wischbewegung, insbesondere eine kreisende Wischbewegung. Wenn beispielsweise eine solche Geste erfasst wird und gleichzeitig eine Mikrobewegung erfasst wird, wird die Geste vorteilhafterweise als plausibel angesehen.

Vorteilhafterweise wird zur Erfassung der Bewegung der Bedieneinrichtung eine Beschleunigung und/oder eine Drehung der Bedieneinrichtung erfasst.

In einer vorteilhaften Ausgestaltung der Erfindung werden erfasste Bewegungs- und/oder Lagedaten der Bedieneinrichtung von dieser an eine Auswerteeinheit übermittelt, welche vorgegebene Sicherheitsrichtlinien erfüllt.

Durch Anwendung des Verfahrens ist es möglich, die Funktion des Fahrzeuges, beispielsweise ein Einparken, vergleichsweise schnell zu aktivieren. Zudem ist die Aktivierung intuitiv und vergleichsweise leicht verständlich für einen Fahrzeugnutzer und kann somit problemlos nachvollzogen werden.

Die vergleichsweise leichte Verständlichkeit fördert einen natürlichen Ablauf des ferngesteuerten Einparkens, wobei der Fahrzeugnutzer weniger abgelenkt ist und dem Einparken, d. h. der Fernsteuerung, höhere Aufmerksamkeit zuteil kommen lässt.

Ausführungsbeispiele der Erfindung werden im Folgenden anhand einer Zeichnung näher erläutert.

Dabei zeigt die:

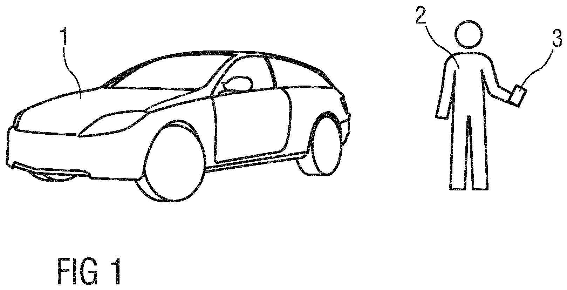

- Fig. 1: schematisch ein Fahrzeug und einen Fahrzeugnutzer mit einer Bedieneinrichtung.

In der einzigen Figur sind ein Fahrzeug 1 und ein Fahrzeugnutzer 2 mit einer Bedieneinrichtung 3, insbesondere mit einer mobilen Datenverarbeitungseinheit in Form eines Smartphones, dargestellt. Die Bedieneinrichtung 3 ist zur Fernsteuerung einer Funktion des Fahrzeuges 1 vorgesehen, wobei in dem vorliegenden Ausführungsbeispiel als fernsteuerbare Funktion ein autonomer Einparkvorgang des Fahrzeuges 1 beschrieben wird. Die Bedieneinrichtung 3 dient somit der Steuerung des autonomen Einparkvorgangs, d.h. der Einparkvorgang kann über von einem Fahrzeugnutzer an der Bedieneinrichtung 3 vorgenommene Eingabe gestartet werden, aufrecht erhalten werden und beendet oder unterbrochen werden. Die ferngesteuerte Funktion kann gleichermaßen auch eine autonome Ausparkfunktion sein.

Bei der Bedieneinrichtung 3 kann es sich alternativ auch um einen Tablet-PC und/oder eine andere geeignete Vorrichtung zur Fernsteuerung der Funktion handeln.

In die Bedieneinrichtung 3 sind ein Beschleunigungssensor und ein Drehratensensor integriert, so dass eine auf die Bedieneinrichtung 3 wirkende Beschleunigung und eine Rotationsgeschwindigkeit, auch als Drehgeschwindigkeit bezeichnet, erfassbar ist.

Alternativ kann vorgesehen sein, dass nur ein Beschleunigungssensor oder nur ein Drehratensensor in die Bedieneinrichtung 3 integriert ist, wobei auch die Anzahl der jeweiligen Erfassungseinheiten variieren kann.

Wie oben beschrieben, ist die Bedieneinrichtung 3 zur Fernsteuerung einer Funktion des Fahrzeuges 1, insbesondere zum ferngesteuerten Einparken, vorgesehen, wobei sich der Fahrzeugnutzer 2 dazu außerhalb des Fahrzeuges 1 befindet.

Zusätzlich oder alternativ können weitere Funktionen des Fahrzeuges 1, beispielsweise andere autonome Fahrvorgänge, z. B. ein Ausparkvorgang, eine Lichtfunktion und/oder ein Öffnen und Schließen mittels der Bedieneinrichtung 3 gesteuert werden.

Die Bedieneinrichtung 3 ist ein Smartphone, welches eine Sende- und eine Empfangseinheit zur Herstellung einer Verbindung, insbesondere einer Funkverbindung, zwischen dem Fahrzeug 1 und der Bedieneinrichtung 3 aufweist.

Wenn es sich bei der Bedieneinrichtung 3 um ein so genanntes Consumer-Device handelt, erfüllt dieses häufig nicht für Fahrzeuganwendungen erforderliche Sicherheitsrichtlinien, so dass die Gefahr besteht, dass eine sichere Datenauswertung nur bedingt möglich ist. Das Fahrzeug 1 hingegen umfasst typischerweise Steuergeräte, welche die erforderlichen Sicherheitsrichtlinien erfüllen.

Aus diesem Grund wird während der Fernsteuerung des autonomen Einparkens des Fahrzeuges 1 eine geschlossene Kommunikationskette zwischen dem Fahrzeug 1 und der Bedieneinrichtung 3 aufgebaut, wobei das Fahrzeug 1 eindeutig identifiziert und eine Fehl- und/oder Fremdbedienung des Fahrzeuges 1 weitestgehend ausgeschlossen werden kann.

Wie oben beschrieben, umfasst die als Smartphone ausgeführte Bedieneinrichtung 3 einen Beschleunigungssensor und einen Drehratensensor, so dass erfasste Signale der beiden Erfassungseinheiten dahingehend ausgewertet werden können, dass eine Fahrfreigabe des Fahrzeuges 1 zum autonomen Einparken automatisiert erkannt wird.

Hält der Fahrzeugnutzer 2 die Bedieneinrichtung 3 vergleichsweise ruhig in seiner Hand, wobei die Bedieneinrichtung 3 auf das Fahrzeug 1 gerichtet ist, kann dies als Betätigungsgeste in Bezug auf den Einparkvorgang gewertet werden.

Auch bei dem vergleichsweise ruhigen Halten der Bedieneinrichtung 3 bewegt der Fahrzeugnutzer 2 geringfügig seine Hand, wodurch mittels des Beschleunigungssensors und/oder Drehratensensors Mikrobewegungen erfasst werden, die in Bezug auf eine Stärke, eine Breite und/oder Position ausgewertet werden können.

Werden bei der Betätigungsgeste solche Mikrobewegungen nicht erfasst, kann daraus geschlossen werden, dass eine Signalübertragung eingefroren ist.

Alternativ oder zusätzlich kann die Erfassung solcher Mikrobewegungen auch dazu genutzt werden, um eine bestehende Gestenerkennung in Bezug auf den autonomen Einparkvorgang zu plausibilisieren. So wird die Bedieneinrichtung 3 in Form des Smartphones beim Durchführen einer kreisenden Geste mit einer dazu korrelierenden Bewegung vergleichsweise leicht hin und her bewegt.

Wird eine Bewegungsänderung der Bedieneinrichtung 3 erkannt, die diese Mikrobewegungen übersteigt, wird der autonome Einparkvorgang beendet und das Fahrzeug 1 gestoppt. Eine Änderung der Mikrobewegung kann beispielsweise auch durch Antippen der beispielsweise als Smartphone ausgebildeten Bedieneinrichtung 3 hervorgerufen werden. Bei einer Überwachung kann in einer möglichen Ausgestaltung auch eine Betätigung eines Buttons der Bedieneinrichtung 3 abgesichert werden.

Unter einer solchen Bewegungsänderung ist beispielsweise zu verstehen, dass der Fahrzeugnutzer 2 seine Hand, in der er die Bedieneinrichtung 3 hält, vom Fahrzeug 1 wegdreht und/oder eine plötzliche Bewegung mit dieser Hand durchführt.

Eine solche die Mikrobewegung übersteigende Bewegung lässt darauf schließen, dass der Fahrzeugnutzer 2 beabsichtigt, das Fahrzeug 1 mittels der Bedieneinrichtung 3 nicht weiter zu bewegen, wobei eine derartige Bewegung nicht weiter als Betätigungsgeste erfasst wird. Das Fahrzeug 1 wird gestoppt und der autonom durchgeführte Einparkvorgang wird beendet.

Neben der Bewegung an sich kann auch eine absolute Lage der Bedieneinrichtung 3 berücksichtigt werden. Zum Beispiel kann das Fahrzeug 1 gestoppt werden, wenn ein Display der Bedieneinrichtung3 nach unten gerichtet ist, unabhängig davon, ob die Bewegung bezüglich Beschleunigung oder Geschwindigkeit einen Grenzwert übersteigt.

Mittels eines oben beschriebenen Verfahrens kann eine Aktivierung der Funktion des Fahrzeuges 1 vergleichsweise schnell erfolgen, wobei die Aktivierung für den Fahrzeugnutzer 2 intuitiv und leicht verständlich ist.

## Patentansprüche

1. Verfahren zur Fernsteuerung einer Funktion eines Fahrzeuges (1) mittels einer mobilen Bedieneinrichtung (3), wobei die Funktion in Abhängigkeit einer erfassten Bewegung der Bedieneinrichtung (3) zur Ausführung freigegeben oder gesperrt wird,
**dadurch gekennzeichnet, dass**
eine zwingende Bedingung für die Freigabe der Funktion zur Ausführung ist, dass die erfasste Bewegung eine Mikrobewegung ist, bei der Schwankungen einer Position und/oder Ausrichtung der Bedieneinrichtung (3) so geringfügig sind, dass sie einer Bewegung entsprechen, die der Fahrzeugnutzer mit seiner Hand ausführt, wenn er versucht, die Bedieneinrichtung (3) ruhig in der Hand zu halten.

2. Verfahren nach Anspruch 1,
**dadurch gekennzeichnet, dass** die Funktion zur Ausführung nicht freigegeben wird oder gesperrt wird, wenn keine Bewegung erfasst wird.

3. Verfahren nach Anspruch 2,
**dadurch gekennzeichnet, dass** die erfassten Schwankungen geringfügig sind, wenn sie in ihrem Ausmaß begrenzt sind.

4. Verfahren nach Anspruch 2 oder 3,
**dadurch gekennzeichnet, dass** die erfassten Schwankungen geringfügig sind, wenn sie in ihrer Dynamik begrenzt sind.

5. Verfahren nach eine der vorhergehenden Ansprüche,
**dadurch gekennzeichnet, dass** mittels der erfassten Mikrobewegung eine erfasste Geste plausibilisiert wird.

6. Verfahren nach einem der vorhergehenden Ansprüche,
**dadurch gekennzeichnet, dass** als Bewegung eine Beschleunigung und/oder eine Drehung der Bedieneinrichtung (3) erfasst werden bzw. wird.

7. Verfahren nach einem der vorhergehenden Ansprüche,
**dadurch gekennzeichnet, dass** erfasste Bewegungs- und/oder Lagedaten der Bedieneinrichtung (3) von diesem an eine Auswerteeinheit, welche vorgegebene Sicherheitsrichtlinien erfüllt, übermittelt werden.

## Claims

1. Method for the remote control of a function of a vehicle (1) by means of a mobile control device (3), wherein the function is enabled for execution or blocked depending on a detected movement of the control device (3), **characterised in that**
it is a mandatory condition for enabling the function for execution that the detected movement is a micro-movement in which fluctuations of a position and/or orientation of the control device (3) are so insignificant that they correspond to a movement performed by the user of a vehicle with the hand when trying to hold the control device (3) still in the hand.

2. Method according to claim 1,
**characterised in that** the function is not enabled for execution or is blocked if no movement is detected.

3. Method according to claim 2,
**characterised in that** the detected fluctuations are insignificant if they are limited in their magnitude.

4. Method according to claim 2 or 3,
**characterised in that** the detected fluctuations are insignificant if they are limited in their dynamics.

5. Method according to any of the preceding claims,
**characterised in that** a detected gesture is made plausible by means of the detected micro-movement.

6. Method according to any of the preceding claims,
**characterised in that** an acceleration and/or a rotation of the control device (3) are/is detected as a movement.

7. Method according to any of the preceding claims,
**characterised in that** detected movement and/or position data of the control device (3) are transferred by the latter to an evaluation unit that meets predetermined safety directives.

## Revendications

1. Procédé de commande à distance d'une fonction d'un véhicule à moteur (1) au moyen d'un dispositif de commande mobile (3), la fonction de mise en œuvre étant libérée ou bloquée en fonction d'un mouvement détecté du dispositif de commande (3), **caractérisé en ce qu'**une condition impérative pour la libération de la fonction de mise en œuvre consiste **en ce que** le mouvement détecté est un micro-mouvement, dont les oscillations d'une position et/ou d'une orientation du dispositif de commande (3) sont si insignifiantes qu'elles correspondent à un mouvement que l'utilisateur du véhicule à moteur produit avec sa main, lorsqu'il tente de maintenir calmement le dispositif de commande (3) dans la main.

2. Procédé selon la revendication 1, **caractérisé en ce que** la fonction de mise en œuvre n'est pas libérée ou n'est pas bloquée lorsqu'aucun mouvement n'est détecté.

3. Procédé selon la revendication 2, **caractérisé en ce que** les oscillations détectées sont insignifiantes lorsqu'elles sont limitées dans leur ampleur.

4. Procédé selon la revendication 2 ou la revendication 3, **caractérisé en ce que** les oscillations détectées sont insignifiantes lorsqu'elles sont limitées dans leur dynamique.

5. Procédé selon l'une quelconque des revendications précédentes, **caractérisé en ce que** le micro-mouvement détecté permet de plausibiliser un geste détecté.

6. Procédé selon l'une quelconque des revendications précédentes, **caractérisé en ce qu'**une accélération et/ou une rotation du dispositif de commande (3) est/sont détecté(es) en tant que mouvement.

7. Procédé selon l'une quelconque des revendications précédentes, **caractérisé en ce que** les données de mouvement et/ou de position du dispositif de commande (3) sont transmises par celui-ci à une unité d'évaluation qui remplit les règles de sécurité prédéfinies.
